**Europäisches Patentamt**

**European Patent Office**

**Office européen des brevets**

(19)

(11) Veröffentlichungsnummer : **0 063 227 B2**

# (12) NEUE EUROPÄISCHE PATENTSCHRIFT

(45) Veröffentlichungstag der neuen Patentschrift :
15.05.91 Patentblatt 91/20

(51) Int. Cl.⁵ : **F16D 23/06**

(21) Anmeldenummer : **82101671.4**

(22) Anmeldetag : **04.03.82**

(54) Gleichlaufeinrichtung, insbesondere für das Wechselgetriebe eines Kraftfahrzeugs.

(30) Priorität : 04.04.81 DE 3113650

(43) Veröffentlichungstag der Anmeldung :
27.10.82 Patentblatt 82/43

(45) Bekanntmachung des Hinweises auf die
Patenterteilung :
29.04.87 Patentblatt 87/18

(45) Bekanntmachung des Hinweises auf die
Entscheidung über den Einspruch :
15.05.91 Patentblatt 91/20

(84) Benannte Vertragsstaaten :
AT DE FR GB IT SE

(56) Entgegenhaltungen :
DE-A- 2 855 527
DE-A- 2 922 658
DE-B- 1 152 311
DE-B- 1 208 966
DE-B- 2 628 039
FR-A- 888 638
FR-A- 2 119 242
Looman, Zahnradgetriebe, Konstruktionsbücher Band 26, Springer Verlag, Berlin, Heidelberg, New York, 1970; Seite 184, Abbildung
6.28

(56) Entgegenhaltungen :
Prospekt ZF-Synchroma-Getriebe 4S-120GP,
Zahnradfabrik Friedrichshafen AG, 1976
KT-Blatt ZF-Allklauen-Getriebe4K-120GP,
Zeichnungs-Nr. 1285 000 701 a(o) Blatt 1 vom
14.4.1975
Prospekt ZF-Synchroma Getriebe 5S-110GP,
Zahnradfabrik Friedrichshafen AG, 1973
KT-Blatt ZF-Allklauen-Getriebe 5K-110-GP,
Zeichnungs-Nr. 1269 001 700 a(o) Blatt 1 vom
10.4.1973
Demontage- und Montageanleitung-Einbauanlage zu dem ZF-Getriebe 5S-110GP vom
Januar 1974, Seiten 1,3 und 121-126
Prospekt ZF-Ecosplit Getriebe ZF-16S130 Januar 1981
Werkstatt-Handbuch Getriebe Nutzfahrzeuge,
Band 2, Daimler Benz AG, Stuttgart-Untertürkheim Werk Wörth Kundendienst; Titelblatt, Impressum, 26 Einbauübersicht Seite 1 und 26.4
Bilder-Schnittbilder Seiten 002/3 bis 002/5

(73) Patentinhaber : Klöckner-Humboldt-Deutz
Aktiengesellschaft
Deutz-Mülheimer-Strasse 111 Postfach 80 05
09
W-5000 Köln 80 (DE)

(72) Erfinder : Zenker, Walter
Pippelstein 49
W-5060 Bergisch Gladbach 3 (DE)

EP 0 063 227 B2

## Beschreibung

Die Erfindung bezieht sich auf eine Gleichlaufeinrichtung für ein Wechselgetriebe, insbesondere für das Wechselgetriebe eines Kraftfahrzeugs, bei der auf einer Getriebewelle drehfest ein ringförmiger Schaltmuffenträger angeordnet ist, an den ein mit einer konischen Reibfläche auschenes und mit einem auf der Getriebewelle lose gelagerten Zahnrad einstückig ausgebildeter oder drehfest verbundener Kupplungsring angrenzt, der über seine Reibfläche mit einer angepaßten konischen Reibfläche eines Gleichlaufringes zusammenwirkt, und bei der durch Hohlräume zwischen dem Schaltmuffenträger und dem angrenzenden Kupplungsring ein Ringraum gebildet ist, der mit Schmiermittel versorgt wird, wobei den Kupplungsring Öffnungen aufweist, die die Reibflächen mit dem Ringraum verbinden.

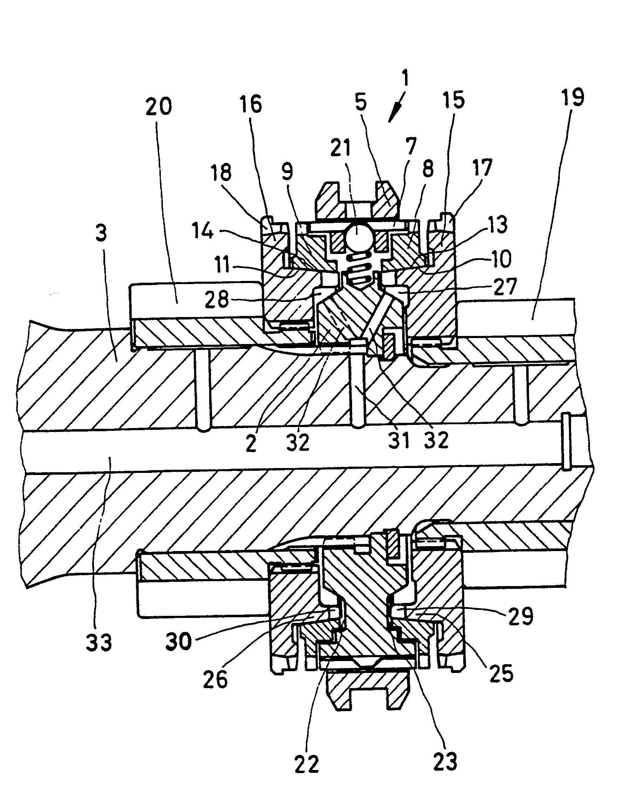

Aus Looman "Zahnrad getriebe" Konstruktion bücher Band 26, Springer Verlag, 1970, Seite 184, Abb. 6.28 ist eine Gleichlaufeinrichtung bekannt, bei der ebenfalls konische Reibflächen zwischen den Gleichlauf- und Kupplungsringen vorgesehen sind. Über die Gleichlauf- und Kupplungsringe erfolgt die Anpassung der Umfangsgeschwindigkeit an die auf Gleichlauf zu bringenden Getriebeteile, indem die Gleichlauf- und Kupplungsringe miteinander in Reibung gebracht werden. Ein hierbei an den Reibflächen unvermeidbarer Verschleiß kann dadurch verringert werden, indem zwischen die Reibflächen ausreichend Schmiermittel gebracht wird. Bei der bekannten Gleichlaufeinrichtung erfolgt die Zuführung des Schmiermittels über im Kupplungsring angeordnete stichbohrungen.

Dabei ist jedoch die Ölversogung an den Reibflächen nicht lückenlos sichergestellt. Aufgrund der Förderwirkung den konisch ausgebildeten Reibflächen wird das Schmiermittel in Richtung des größten Durchmessers gefürdet, wodurch der Bereich zwischen Stichbohrungen und innerem Konnsende weitgehend umgeschmiert und imgekühlt bleibt.

Der Erfindung liegt die Aufgabe zugrunde, unter Vermeidung des geschilderten Nachteils eine Gleichlaufeinrichtung der eingangs umrissenen Art mit einfachen Mitteln dahingehend zu verbessern, daß die Reibflächen des Kupplungs- und Gleichlaufringes mit Sicherheit stets ausreichend mit Schmiermittel versorgt werden.

Die Aufgabe wird erfindungsgemäß dadurch gelöst, daß am Gleichlaufring und/oder am Kupplungsring mehrere sowohl zur Reibfläche des gegenüberliegenden Kupplungs- bzw. Gleichlaufringes als auch zu dem Ringraum sowie zum Schaltmuffenträger hin offene taschenförmige Aussparungen, Bohrungen oder dergl. angeordnet sind und daß der Ringraum ferner durch Bohrungen im Schaltmuffenträger sowie durch Bohrungen in der Getriebewelle mit dem Schmiermittelkreislauf des Wechselgetriebes verbundem ist.

Durch diese Maßnahmen wird das kontinuierlich vom Schmiermittelkreislauf zum Ringraum geförderte Öl von den taschenförmigen Aussparungen aufgefangen und ebenso kontinuierlich an die Reibflächen der Kupplungs- und Gleichlaufringe weitergeführt. Dabei ist die von den taschenförmigen Aussparungen aufgefangene Ölmenge so bemessen, daß der Verschleiß an den Reibflächen der Kupplungs- und Gleichlaufringe auf ein Minimum beschränkt wird. Zusätzlich wird durch den ständig in die taschenförmigen Aussparungen zwischen die Kupplungs- und Gleichlaufringe geleiteten Ölfluß und durch den außen an den Ringen vorbeigeleiteten Ölstrom für eine gute Abführung der an den Reibflächen durch Synchronisierung erzeugten Wärme gesorgt.

In Weiterbildung der Erfindung weist der Schaltmuffenträger an jeder Stirnseite eine ringförmige Aussparung zum Eingreifen der Kupplungs- bzw. Gleichlaufringe auf, wobei der Kupplungsring mit einer einen Teil seiner Reibfläche tragenden Schulter bis nahe an den Schaltmuffenträger heranreicht und mit der Schulter gegenüber einem Teil der Aussparung des Schaltmuffenträgers den Ringraum bildet und wobei die taschenförmigen Aussparungen in der Schulter des Kupplungringes angeordnet sind.

Schließlich ist es zur Verteilung des Öls innerhalb der Gleichlaufeinrichtung zweckdienlich, wenn die am Schaltmuffenträger beiderseits in den Ringräumen mündenden Bohrungen innerhalb des Schaltmuffenträgers wechselseitig versetzt zueinander und zu damit verbundenen Radialbohrungen in der Welle V-förmig verlaufen, wodurch das durch die Fliehkraft abgeschleuderte Öl gezielt über die taschenförmigen Aussparungen auf die Reibflächen gebracht wird.

Die Erfindung wird im folgenden anhand eines Ausführungsbeispiels unter Bezugnahme auf die Zeichnung näher beschrieben.

Die in der Zeichnung in Axialschnitt dargestellte Gleichlaufeinrichtung 1 weist einen Schaltmuffenträger 2 auf, der auf einer Welle 3 drehfest angeordnet ist. Auf der Schaltmuffenträger 2 sitzt in einer Verzahnung desselben axial verschiebbar eine Schaltmuffe 5, die eine beiderseits überstehende Verzahnung 7 aufweist. Beiderseits der Schaltmuffe 5 ist je ein Gleichlaufring 8, 9 gelagert in deren am Umfang sitzende Sperrverzahnung die Schaltmuffe 5 mit ihrer Verzahnung 7 eingreift. Die beiden Gleichlaufringe 8, 9 haben kegelige Reibflächen 10 bzw. 11, die mit entsprechenden kegeligen Reibflächen 13 bzw. 14 zweier Kupplungsringe 15, 16 zusammenwirken. Die beiden Kupplungsringe 15 und 16 tragen am Umfang Verzahnungen 17 bzw. 18, in die nach erreichten Gleichlauf die Verzahnung 7 der Schaltmuffe 5 eingreift. Die beiden Kupplungsringe 15 und 16 sind drehfest mit je einem Zahnrad 19 bzw. 20 gekoppelt, die beiderseits der Gleichlaufeinrichtung 1 drehbar auf der Welle 3 gelagert sind. Durch eine oder mehrere in den Schaltmuffenträger 2 eingesetzte Federrasten 21 wird die Schaltmuffe 5 in Mittelstellung gehalten. Der Schaltmuffenträger 2 hat beiderseits an den Stirnseiten Aussparungen 22, 23, in die sowohl die Gleichlaufringe 8 bzw. 9 als auch die Kupplungsringe 15 bzw. 16 mit Schultern hineinragen. Dabei reichen zumindest die mit 25 bzw. 26 bezeichneten Schultern der Kupplungsringe 15 und 16 bis nahe an den Schaltmuffenträger 2 heran und bilden in der Aussparung 22 bzw. 23 je einen Ringraum 27 bzw. 28. In den Schultern 25, 26 sind über den Umfang derselben verteilt taschenförmige Aussparungen 29 bzw. 30 angeordnet, die sowohl zur Reibfläche des gegenüberliegenden Gleichlaufringes 8 bzw. 9 als auch zum entsprechenden Ringraum 27 bzw. 28 hin offen sind. Im Schaltmuffenträger 2 sind mehrere gegenseitig versetzt zueinander und zu damit verbundenen radialen Bohrungen 31 der Welle 3 V-förmig verlaufende Bohrungen 32 vorgesehen, die im Ringraum 27 bzw. 28 münden. Die radialen Bohrungen 31 sind in der Welle 3 an eine axiale Bohrung 33 angeschlossen, die in einer nicht dargestellten Weise mit dem Schmiermittelkreislauf des Wechselgetriebes verbunden ist.

Beim Betrieb des Wechselgetriebes wird bei Betätigung der Schaltmuffe 5 beispielsweise nach rechts zunächst Gleichlauf zwischen dem über den Schaltmuffenträger 2 ständig angetriebenen Gleichlaufring 8 sowie dem Kupplungsring 15 dadurch erreicht, daß die Schaltmuffe 5 den Gleichlaufring 8 mit seiner Reibfläche 10 in verstärktem Maße gegen die Reibfläche 13 des Kupplungsringes 15 drückt, so daß schließlich bei Gleichlauf die Verzahnung 7 der Schaltmuffe 5 ohne Schaltruck in den Kupplungskranz 17 des Kupplungsringes 15 eingreifen kann. Bei der Synchronisierung werden selbstverständlich die Reibflächen 10, 13 sowie 11, 14 stark beansprucht, so daß an diesen Stellen eine gute Schmierung bzw. Kühlung erforderlich ist. Durch die ständige Verbindung der Ringräume 27, 28 mit dem Schmiermittelkreislauf durch die Bohrungen 31, 32 ist zunächst dafür gesorgt, daß den Ringräumen 27, 28 stets ausreichend Öl zugeführt wird. Dabei wird die Führung des durch die Fliehkraft abgeschleuderten Öls von den Ringräumen 27, 28 zu den Reibflächen 10, 13 bzw. 11, 14 dadurch wesentlich verbessert, daß die mit den Ringräumen 27, 28 verbundenen taschenförmigen Aussparungen 29 bzw. 30 an den Schultern der Kupplungsringe 15, 16 angeordnet sind. Durch die taschenförmigen Aussparungen 29 bzw. 30 wird das Öl gleichmäßig über die Reiblächen verteilt und dient sowohl zur Schmierung derselben als auch zur Abführung von Wärme.

## Ansprüche

1. Gleichlaufeinrichtung (1) für ein Wechselgetriebe, insbesondere für das Wechselgetriebe eines Kraftfahrzeugs, bei der auf einer Getriebewelle (3) drehfest ein ringförmiger Schaltmuffenträger (2) angeordnet ist, an den ein mit einer konischen Reibfläche (13, 14) versehener und mit einem auf der Getriebewelle (3) lose gelagerten Zahnrad (19, 20) einstückig ausgebildeter oder drehfest verbundener Kupplungsring (15, 16) angrenzt, der über seine Reibfläche (13, 14) mit einer angepaßten konischen Reibfläche (10, 11) eines Gleichlaufringes (8, 9) zusammenwirkt und bei der durch Hohlräume zwischen dem Schaltmuffenträger (2) und dem angrenzenden Kupplungsring (15, 16) ein Ringraum (27, 28) gebildet ist, der mit Schmiermittel versorgt wird, wobei der Kupplungsring (15, 16) Öffnungen aufweist, die die Reibflächen (13, 14) mit dem Ringraum (27, 28) verbinden, dadurch gekennzeichnet, daß am Kupplungsring (15, 16) als Öffnungen mehrere sowohl zur Reibfläche (10, 11) des gegenüberliegenden Gleichlaufringes (8, 9) als auch zu dem Ringraum (27, 28) sowie zum Schaltmuffenträger (2) hin offene taschenförmige Aussparungen (29, 30) angeordnet sind und daß der Ringraum (27, 28) ferner durch Bohrungen (32) im Schaltmuffenträger (2) sowie durch Bohrungen (31, 33) in der Getriebewelle (3) mit dem Schmiermittelkreislauf des Wechselgetriebes verbunden ist.

2. Gleichlaufeinrichtung nach Anspruch 1, dadurch gekennzeichnet, daß der Schaltmuffenträger (2) an jeder Stirnseite eine ringförmige Aussparung (22, 23) zum Eingreifen der Kupplungs- bzw. Gleichlaufringe (15, 16 bzw. 8, 9) aufweist, daß der Kupplungsring (15, 16) mit einer einen Teil seiner Reibfläche (13, 14) tragenden Schulter (25, 26) bis nahe an den Schaltmuffenträger (2) heranreicht und mit der Schulter (25, 26) gegenüber einem Teil der Aussparung (22, 23) des Schaltmuffenträgers (22) den Ringraum (27, 28) bildet und daß die taschenförmigen Aussparungen (29, 30) in der Schulter (25, 26) des Kupplungsringes (15, 16) angeordnet sind.

3. Gleichlaufrichtung nach einem der vorhergehenden Ansprüche, dadurch gekennzeichnet, daß die am Schaltmuffenträger (2) beiderseits in den Ringräumen (27, 28) mündenden Bohrungen (32) innerhalb des Schaltmuffenträgers (2) wechselseitig versetzt zueinander und zu damit verbundenen Radialbohrungen (31) in der Welle (3) v-förmig verlaufen.

## Claims

1. A synchronizing device (1) for a gear train, especially for the gear-box of a motor vehicle, wherein an annular clutch gear (2) is mounted rotationally fast on a gear shaft (3), in which each of two clutch rings (15, 16) each provided with a tapered friction surface (13, 14) and being formed integrally with or joined rotationally fast to a respective gear wheel (19, 20) – rotatably mounted on the gear shaft (3) – adjoins a respective end face of the clutch gear (2), in which the friction surface (13, 14) of each clutch ring interacts with a matching tapered friction surface (10, 11) of a respective correcting ring (8, 9), in which a cavity between the clutch gear (2) and each of the adjoining clutch rings (15, 16) forms a respective annular space (27, 28) into which a lubricant is fed, and in which the clutch rings (15, 16) are provided with openings which connect the friction surfaces (13, 14) with the annular spaces (27, 28), characterized in that each clutch ring (15, 16) has, as openings, a number of pocket-shaped recesses (29, 30) which are open to the friction surface (10, 11) of the respective oppositely-disposed correcting ring (8, 9) as well as to the respective annular space (27, 28) and the clutch gear (2), and in that each annular space (27, 28) is connected by bores (32) in the clutch gear (2) and by bores (31) and a bore (33) respectively in the gear shaft (3) to the lubrication system of the gear train.

2. A synchronizing device according to claim 1, characterized in that each end face of the clutch gear (2) is provided with an annular recess (22, 23) into which the respective clutch ring (15, 16) and the respective correcting ring (8, 9) protrude, that each clutch ring (15, 16) has a shoulder (25, 26) a part of which carries its friction surface (13, 14) and by which it extends into close vicinity of the clutch gear (2) and forms opposite a part of the respective recess (22, 23) in the clutch gear (2) the respective annular space (27, 28), and in that the pocket-shaped recesses (29, 30) in the clutch rings (15, 16) are arranged in their respective shoulders (25, 26).

3. A synchronizing device according to claim 1 or claim 2, characterized in that each of the bores (32) opens at a respective one of the clutch gear's (2) end faces into the respective annular space (27, 28), and in that the bores (32) are alternately staggered into V-shaped configuration relative to one another within the clutch gear (2) and relative to their communicating bores (31) which extend in radial direction in the gear shaft (3).

**Revendications**

1. Dispositif de synchronisation (1) pour un changement de vitesse, notamment pour le changement de vitesse d'un véhicule automobile, dispositif dans lequel est bloqué en rotation sur un arbre de transmission (3), un support annulaire (2) de manchon de commutation auquel est contigu un anneau d'accouplement (15, 16) comportant une surface de frottement conique (13, 14) et qui est venu d'une seule pièce ou bien bloqué en rotation avec une roue dentée (19, 20) montée folle sur l'arbre de transmission (3), cet anneau d'accouplement coopérant par l'intermédiaire de sa surface de frottement (13, 14) avec une surface de frottement conique adaptée (10, 11) d'un anneau de synchronisation (8, 9), dispositif dans lequel une chambre annulaire (27, 28), qui est alimentée avec un lubrifiant, est constituée par des espaces creux entre le support (2) de manchon de commutation et l'anneau d'accouplement adjacent (15, 16) l'anneau d'accouplement (15, 16) présentant des orifices qui relient les surfaces de frottement (13, 14) à la chambre annulaire (27, 28), dispositif caractérisé en ce que sur l'anneau d'accouplement (15, 16) sont disposés comme ouvertures plusieurs évidements (29, 30) en forme de poches, ouverts aussi bien en direction des surfaces de frottement (10, 11) de l'anneau (8, 9) de synchronisation situé en regard qu'en direction du support annulaire (2) de manchon de commutation, tandis que la chambre annulaire (27, 28) est en outre reliée par des perçages (32) dans le support (2) de manchon de commutation ainsi que par des perçages (31, 33) dans l'arbre de transmission (3) avec le circuit de lubrification de la boîte de vitesses.

2. Dispositif de synchronisation selon la revendication 1, caractérisé en ce que le support (2) de manchon de commutation comporte sur chacune de ses faces frontales un évidement annulaire (22, 23) pour l'entrée en prise des anneaux d'accouplement ou bien de synchronisation (15, 16 ou bien 8, 9), l'anneau d'accouplement (15 ou bien 16) s'avançant avec un épaulement (25 ou bien 26) portant une partie de sa surface de frottement (13 ou bien 14) jusqu'au voisinage du support (2) de manchon de commutation, et formant, avec l'épaulement (25 ou bien 26) en face d'une partie de l'évidement (22 ou bien 23) du support (2) du manchon de commutation, la chambre annulaire (27 ou bien 28), tandis que les évidements en forme de poches (29 ou bien 30) sont disposés dans l'épaulement (25 ou bien 26) de l'anneau d'accouplement (15 ou bien 16).

3. Dispositif de synchronisation selon une des précédentes revendications, caractérisé en ce que les perçages (32) débouchant sur le support (2) de manchon de commutation des deux côtés dans les chambres annulaires (27, 28) sont à l'intérieur du support (2) de manchon de commutation décalés alternativement de chaque côté les uns par rapport aux autres, et s'étendent en forme de V vers des perçages radiaux (31), reliés avec eux, dans l'arbre (3).